# EUROPÄISCHE PATENTSCHRIFT

(11) **EP 2 990 684 B1**
(45) Veröffentlichungstag und Bekanntmachung des Hinweises auf die Patenterteilung: **29.11.2017**
(21) Anmeldenummer: 15174852.2
(22) Anmeldetag: 01.07.2015
(51) Int. Cl.: F16F 1/02, F16F 1/366

(54) **BIEGEFEDERELEMENT AUS EINEM FASERKUNSTSTOFFVERBUNDMATERIAL**
FLEXING SPRING ELEMENT MADE FROM A FIBER PLASTIC COMPOSITE MATERIAL
ÉLÉMENT À RESSORT DE FLEXION CONSTITUÉ D'UN MATÉRIAU COMPOSITE À BASE DE FIBRES SYNTHÉTIQUES

(30) Priorität: 25.07.2014 DE 102014110558
(43) Veröffentlichungstag der Anmeldung: 02.03.2016
(73) Patentinhaber: Keller, Tobias, 67596 Dittelsheim-Heßloch (DE)
(72) Erfinder: Keller, Tobias, 67596 Dittelsheim-Heßloch (DE)
(74) Vertreter: Katscher Habermann Patentanwälte

(56) Entgegenhaltungen:
- EP-A1- 0 132 048
- EP-A2- 0 082 321
- EP-A2- 2 472 137
- DE-A1- 3 515 525

## Beschreibung

Die Erfindung betrifft ein Biegefederelement aus einem Faserkunststoffverbundmaterial mit in einer Längsrichtung des Biegefederelements verlaufend angeordneten Fasern und mit mindestens einem in Längsrichtung eine Krümmung aufweisenden Biegebereich, wobei das Biegefederelement in einem unbelasteten Zustand in dem Biegebereich eine in einer Querrichtung senkrecht zu der Längsrichtung gekrümmte erste Außenfläche aufweist.

Biegefederelemente aus einem Faserkunststoffverbundmaterial werden beispielsweise bei Fahrzeugen eingesetzt und können oftmals Federelemente aus Metall oder Stahl ersetzen. Im Vergleich zu Biegefederelementen aus Stahl weisen die Biegefederelemente aus einem Faserkunststoffverbundmaterial ein geringeres Eigengewicht und eine größere Langzeitstabilität auf, da das Faserkunststoffverbundmaterial korrosionsbeständig ist und bei einer geeigneten Dimensionierung und Anordnung des Biegefederelements wartungsfrei und ermüdungsarm ist.

Die in einem geeigneten Kunststoffmatrixmaterial eingebetteten Fasern sind in Längsrichtung des Biegefederelements ausgerichtet, wobei die Längsrichtung die Richtung der längsten Ausdehnung entlang des Biegefederelements ist und sich die Längsrichtung entsprechend dem Verlauf des Biegefederelements ändern kann, jedoch durch das Biegefederelement vorgegeben ist.

Das Biegefederelement weist einen Biegebereich auf, in den sich das Biegefederelement bei einer Krafteinwirkung elastisch verformen lässt und eine der Krafteinwirkung entgegen gerichtete Rückstellkraft erzeugt.

Es sind Blattfedern aus einem Faserkunststoffverbundmaterial bekannt, bei denen sich der Biegebereich über die gesamte Länge der Blattfeder erstreckt. Die Blattfeder kann in einem unbelasteten Zustand in Längsrichtung flach bzw. eben verlaufen oder aber eine Krümmung aufweisen. Ein in geeigneter Weise in Längsrichtung gekrümmtes Biegefederelement ermöglicht vorteilhafte Federeigenschaften bei einem geringen Bauraum bzw. Auslenkungs- und Verformungsbereich des Biegefederelements.

Es sind ebenfalls Schenkelfedern oder mäanderförmig ausgestaltete Federn bekannt, bei denen jeweils zwei Federschenkel über einen Umlenkungsbiegebereich miteinander verbunden sind. Die jeweils über den Umlenkungsbiegebereich miteinander verbundenen Federschenkeln weisen in einem unbelasteten Zustand einen Winkel zueinander auf, der durch eine äußere Krafteinwirkung entgegen einer Federkraft des derart ausgestalteten Biegefederelements vergrößert oder verkleinert werden kann. Derart ausgestaltete Biegefederelemente können als Zugfedern oder als Druckfedern ausgestaltet sein und eingesetzt werden.

Bei einer äußeren Krafteinwirkung treten in den gekrümmt ausgestalteten Biegebereichen eines Biegefederelements die größten Verformungen und damit einhergehend die größte mechanische Beanspruchung des Biegefederelements auf. Bei der Auslegung des Biegefederelements muss darauf geachtet werden, dass das Biegefederelement in dem Biegebereich ausreichend mechanisch belastbar ausgestaltet ist, um den vorgegebenen bzw. erwarteten mechanischen Beanspruchungen standhalten zu können. Eine Querschnittsfläche des Biegefederelements wird deshalb oftmals ausgehend von dem einen Biegebereich oder gegebenenfalls den mehreren Biegebereichen ausreichend groß vorgegeben, um in dem Biegebereich die dort auftretenden Verformungskräfte aufnehmen zu können. Insbesondere bei Biegefederelementen, bei denen sich der Biegebereich oder die mehreren Biegebereiche nur über einen Teil der Länge des Biegefederelements erstrecken, führt eine derartige Auslegung der Querschnittsfläche des Biegefederelements zu einem hohen Eigengewicht und zu einer überdimensionierten Auslegung des Biegefederelements abseits der Biegebereiche. Derartige Biegefederelemente sind beispielsweise in EP 2 472 137 A2 beschrieben.

In EP 0 082 321 A2 ist eine Biegefeder aus faserverstärktem Kunststoff beschrieben, die aus mehreren übereinander angeordneten Schichten zusammengesetzt ist. Herstellungsbedingt weisen die Außenflächen eine in Längsrichtung der Biegefeder entlang den Rändern der Außenfläche verlaufende Fase auf.

Es wird als eine Aufgabe der vorliegenden Erfindung angesehen, ein Biegefederelement der eingangs genannten Gattung so auszugestalten, dass das Biegefederelement die mechanischen Beanspruchungen während einer bestimmungsgemäßen Verformung besser aufnehmen und bei einem möglichst geringen Eigengewicht des Biegefederelements möglichst vorteilhafte Federeigenschaften aufweisen kann.

Diese Aufgabe wird erfindungsgemäß dadurch gelöst, dass die erste Außenfläche in dem Biegebereich in Längsrichtung konvex gekrümmt ist und in Querrichtung eine konkave Krümmung aufweist. Es hat sich gezeigt, dass die Biegefestigkeit des Biegefederelements in dem durch eine Krafteinwirkung auf das Biegefederelement besonders stark verformten Biegebereich dadurch deutlich erhöht werden kann, dass eine erste Außenfläche des Biegefederelements nicht wie üblich eben bzw. in Querrichtung geradlinig ausgestaltet ist, sondern eine Krümmung aufweist. Durch eine geeignete Ausgestaltung und Vorgabe dieser Krümmung kann eine Vergleichmäßigung der Bauteilanstrengung des Biegefederelements in dem Biegebereich und damit eine möglichst homogene und gleichmäßige Beanspruchung des Biegebereichs während einer erzwungenen Verformung des Biegefederelements erreicht werden. Auf diese Weise lassen sich die Vorteile des Faserkunststoffverbundmaterials für ein erfindungsgemäßes Biegefederelement noch stärker als bisher ausnutzen. Da die Biegefestigkeit durch die gekrümmt ausgestaltete Oberfläche des Biegefederelements in dem Biegebereich erhöht werden kann, kann eine Dicke des Biegefederelements über die gesamte Länge des Biegefederelements hinweg verringert und das Eigengewicht des Biegefederelements entsprechend reduziert werden.

Es hat sich gezeigt, dass besonders vorteilhafte Eigenschaften für das Biegefederelement dadurch erzielt werden können, dass erfindungsgemäß die erste Außenfläche in dem Biegebereich in Längsrichtung konvex gekrümmt ist und in Querrichtung eine konkave Krümmung aufweist. Die in Längsrichtung konvex gekrümmte Außenfläche ist dabei üblicherweise von einem Mittelpunkt des Biegefederelements nach außen gerichtet. Die konkave Krümmung kann sich dabei entweder gleichmäßig über die gesamte Breite des Biegefederelements erstrecken oder von Außenkanten der Außenfläche zu einer Mittellinie hin zunehmen oder abnehmen. Es ist ebenfalls möglich, dass die erste Außenfläche einen abschnittsweise mit unterschiedlichen Krümmungen ausgestalteten Verlauf in Querrichtung aufweist.

Gemäß einer besonders vorteilhaften Ausgestaltung des Erfindungsgedankens ist vorgesehen, dass das Biegefederelement in dem Biegebereich eine der ersten Außenfläche gegenüberliegende in Querrichtung gekrümmte zweite Außenfläche aufweist. Der Biegebereich weist demzufolge zwei einander gegenüberliegende sowohl in Längsrichtung als auch in Querrichtung gekrümmte Außenseiten auf. Die bei einer Verformung des Biegefederelements in dem Biegebereich auftretenden Verformungskräfte können durch eine geeignete Ausgestaltung der Krümmung der beiden Außenflächen in vorteilhafter Weise gleichmäßig über die gekrümmt verlaufenden äußeren Bereiche des Biegefederelements verteilt werden, um lokale Zug- oder Druckspannungsspitzen zu vermeiden, die zu einer frühzeitigen Ermüdung oder Beschädigung des Biegefederelements führen können.

In vorteilhafter Weise ist vorgesehen, dass eine zweite Außenfläche in dem Biegebereich in Längsrichtung konkav gekrümmt ist und in Querrichtung eine konvexe Krümmung aufweist. Bei einer Verformung des Biegebereichs des Biegefederelements können dadurch an einer üblicherweise nach innen bzw. zu einem mittleren Bereich des Biegefederelements gerichteten zweiten Außenfläche vermehrt auftretende Druckbelastungen auf äußere Randbereiche des Biegefederelements in dem Biegebereich verteilt werden und dadurch lokale Druckspitzen reduziert werden.

Durch die Ausgestaltung der ersten Außenfläche mit einer konkaven Krümmung und der zweiten Außenfläche mit einer konvexen Krümmung ist es möglich, das Blattfederelement so auszugestalten, dass das Blattfederelement in dem Biegebereich über eine Querschnittsfläche hinweg eine konstante Dicke aufweist. Der Abstand der ersten Außenfläche zu der zweiten Außenfläche kann in einer Querrichtung senkrecht zu der Längsrichtung konstant sein. Dadurch wird die Herstellung eines derartigen Biegefederelements erleichtert. Zudem ergeben sich bei einer derartigen Ausgestaltung der Biegebereiche des Biegefederelements vorteilhafte Eigenschaften wie beispielsweise eine besonders hohe mechanische Belastbarkeit und Langzeitstabilität.

Es ist ebenfalls möglich und für bestimmte Anwendungsfälle geeignet, dass die Außenflächen eine abweichend zu dem vorangehend genannten Ausführungsbeispiel ausgestaltete Krümmung aufweisen. So kann durch eine Ausgestaltung der ersten Außenfläche mit einer konvexen Krümmung in Längsrichtung und in Querrichtung und der zweiten Außenfläche mit einer konkaven Krümmung in Längsrichtung und in Querrichtung die Stabilität des Biegebereichs gegenüber Knicken oder Drillknicken verbessert werden.

Gemäß einer Ausgestaltung des Erfindungsgedankens ist vorgesehen, dass das Biegefederelement einen zwischen zwei in entgegengesetzter Richtung verlaufenden Federschenkelabschnitten angeordneten Umlenkungsbiegebereich aufweist, in dem die erste in Längsrichtung konvex gekrümmte Außenfläche in Querrichtung eine konkave Krümmung und die zweite in Längsrichtung konkav gekrümmte Außenfläche in Querrichtung eine konvexe Krümmung aufweist. Der Umlenkungsbiegebereich ist ein Biegebereich, in dem sich eine Ausrichtung des Biegefederelements in Längsrichtung umkehrt, bzw. um mehr als 90° verändert, so dass beispielsweise V-förmige Biegefederelemente mit einem Umlenkungsbiegebereich oder schlangenförmige, bzw. mäanderförmige Biegefederelemente mit mehreren jeweils mit Federschenkelabschnitten miteinander verbundenen Umlenkungsbiegebereichen möglich sind.

Derartige Biegefederelemente mit einem schlangenförmigen oder mäanderförmigen Verlauf ermöglichen es, bei einem geringen Raumbedarf sehr hohe Federkräfte aufzunehmen bzw. zu erzeugen und gleichzeitig günstige Federeigenschaften wie beispielsweise einen für entsprechende Anwendungsfälle ausreichend großen Federweg und eine hohe Langzeitstabilität aufzuweisen. Durch die in den Umlenkungsbiegebereichen auf beiden gegenüberliegenden Außenflächen in Querrichtung ausgebildete Krümmung werden in dem durch die erzwungenen Verformungen besonders belasteten Umlenkungsbereiche die während einer Verformung auftretenden Zug- und Druckbelastungen über die beiden Außenflächen weitgehend gleichmäßig verteilt. Die in Querrichtung konkave Krümmung der Außenseite verhindert eine übermäßig hohe Zugbeanspruchung der außenliegenden Fasern. In gleicher Weise verhindert die in Querrichtung konvex gekrümmte Innenseite eine übermäßig große Druckbeanspruchung der innenliegenden Fasern. Die jeweiligen Maximalwerte der Zugebeanspruchung in einem äußeren Bereich innerhalb des Umlenkungsbiegebereichs und der Druckbeanspruchung eines innenliegenden Bereichs innerhalb des Umlenkungsbiegebereichs werden jeweils reduziert und damit einhergehend ein Spannungsunterschied zwischen den außenliegenden Fasern und den innenliegenden Fasern verringert.

Gemäß einer besonders vorteilhaften Ausgestaltung des Erfindungsgedankens ist vorgesehen, dass mindestens ein Federschenkelabschnitt einen in Längsrichtung S-förmigen Verlauf aufweist und der in Längsrichtung gekrümmte Federschenkelabschnitt mindestens eine in Querrichtung gekrümmte Außenfläche aufweist. Vorzugsweise ist vorgesehen, dass auch der in Längsrichtung gekrümmt verlaufende Federschenkelabschnitt zwei gegenüberliegende und in Querrichtung gekrümmte Außenflächen aufweist. Es hat sich als besonders vorteilhaft herausgestellt, dass die in Längsrichtung gekrümmten Federschenkelabschnitte eine in Querrichtung konkav gekrümmte Außenfläche und eine gegenüberliegende und in Querrichtung konvex gekrümmte Außenfläche aufweist.

Zusätzlich zu der in Querrichtung gekrümmten Außenseite kann das Biegefederelement in dem Biegebereich senkrecht zu der Längsrichtung eine größere Querschnittsfläche als in einem benachbarten Bereich aufweisen. Das Biegefederelement kann in den Biegebereichen und insbesondere in den Umlenkungsbiegebereichen eine deutlich größere Dicke bzw. Querschnittsfläche als in den benachbarten Bereichen aufweisen. Insbesondere die durch eine von außen auf das Biegefederelement einwirkende Kraft nicht oder lediglich geringfügig verformten Bereiche können dadurch deutlich dünner und mit einer erheblich geringeren Querschnittsfläche ausgebildet sein.

Um ein derart ausgestaltetes Biegefederelement herzustellen kann vorgesehen sein, dass in unterschiedlichen Bereichen des Biegefederelements eine unterschiedlich große Anzahl von Prepregs in ein Werkzeug eingebracht und anschließend miteinander verfestigt werden.

Derartig ausgestaltete Biegefederelemente können in vorteilhafter Weise als Federelemente bei Fahrzeugen und insbesondere bei Kraftfahrzeugen eingesetzt werden. Geeignet ausgestaltete Biegefederelemente können einzeln oder in Form einer aus mehreren derartigen Biegefederelementen zusammengesetzten Federelementeinrichtung zur federnden Lagerung einer Radaufhängung oder eines Fahrzeugchassis, bzw. einzelner Komponenten des Fahrzeugs verwendet werden. Da über die Dimensionierung der Biegefederelemente eine weitgehende Anpassung an Vorgaben bezüglich der Federeigenschaften und des zur Verfügung stehenden Nutzraums möglich ist, können solche Biegefederelemente ebenfalls vorteilhaft im Maschinenbau eingesetzt werden.

Nachfolgend werden einige exemplarische Ausführungsbeispiele des Erfindungsgedankens näher erläutert, die in der Zeichnung dargestellt sind. Es zeigt:
Fig. 1 eine Seitenansicht eines ersten mäanderförmig ausgestalteten Biegefederelements,
Fig. 2 eine in Richtung des Pfeils I betrachtete andere Seitenansicht des in Fig. 1 dargestellten Biegefederelements,
Fig. 3 eine Schnittansicht des in den Fig. 1 und 2 dargestellten Biegefederelements längs der Linie A-A in Fig. 2,
Fig. 4 eine Schnittansicht des Biegefederelements längs der Linie B-B in Fig. 2,
Fig. 5 eine vergrößert dargestellte Schnittansicht des Bereichs V in Fig. 3,
Fig. 6 eine vergrößert dargestellte Schnittansicht des Bereichs VI in Fig. 4,
Fig. 7 eine Schnittansicht bzw. eine Querschnittsfläche des in den Fig. 1-6 dargestellten Biegefederelements längs der Linie D-D,
Fig. 8 eine Schnittansicht bzw. eine Querschnittsfläche des in den Fig. 1-6 dargestellten Biegefederelements längs der Linie C-C,
Fig. 9 eine Schnittansicht bzw. eine Querschnittsfläche des in den Fig. 1-6 dargestellten Biegefederelements längs der Linie E-E in Fig. 1,
Fig. 10 eine Seitenansicht eines abweichend ausgestalteten Biegefederelements,
Fig. 11 eine in Richtung des Pfeils XI betrachtete andere Seitenansicht des in Fig. 10 dargestellten Biegefederelements,
Fig. 12 eine Schnittansicht des in den Fig. 10 und 11 dargestellten Biegefederelements längs der Linie A-A in Fig. 11,
Fig. 13 eine Schnittansicht entsprechend Fig. 12 des in den Fig. 10-12 dargestellten Biegefederelements längs der Linie B-B in Fig. 11,
Fig. 14 eine vergrößert dargestellte Schnittansicht eines Bereichs XIV der in Fig. 12 dargestellten Schnittansicht des Biegefederelements,
Fig. 15 eine vergrößert dargestellte Schnittansicht des Bereichs XV der in Fig. 13 dargestellten Schnittansicht des Biegefederelements,
Fig. 16 eine Schnittansicht bzw. eine Querschnittsfläche des den Fig. 10-15 dargestellten Biegefederelements längs der Linie C-C in Fig. 10,
Fig. 17 eine Schnittansicht bzw. eine Querschnittsfläche des in den Fig. 10-15 dargestellten Biegefederelements längs der Linie D-D in Fig. 10,
Fig. 18 eine Schnittansicht bzw. eine Querschnittsfläche des in den Fig. 10-15 dargestellten Biegefederelements längs der Linie E-E in Fig. 10,
Fig. 19 eine Schnittansicht bzw. eine Querschnittsfläche des in den Fig. 10-15 dargestellten Biegefederelements längs der Linie F-F in Fig. 10,
Fig. 20 eine Seitenansicht eines wiederum abweichend ausgestalteten Biegefederelements,
Fig. 21 eine in Richtung des Pfeils XXI betrachtete andere Seitenansicht des in Fig. 20 dargestellten Biegefederelements,
Fig. 22 eine Schnittansicht des in den Fig. 20 und 21 dargestellten Biegefederelements längs der Linie A-A in Fig. 21,
Fig. 23 eine Schnittansicht entsprechend der Schnittansicht von Fig. 22 des in den Fig. 20-22 dargestellten Biegefederelements längs der Linie B-B in Fig. 21,
Fig. 24 eine vergrößert dargestellte Schnittansicht des Bereichs XXIV der Schnittansicht in Fig. 22,
Fig. 25 eine vergrößert dargestellte Schnittansicht des Bereichs XXV der Schnittansicht gemäß Fig. 23,
Fig. 26 eine Schnittansicht bzw. eine Querschnittsfläche des in den Fig. 20-25 dargestellten Biegefederelements längs der Linie C-C in Fig. 20,
Fig. 27 eine Schnittansicht bzw. eine Querschnittsfläche des in den Fig. 20-25 dargestellten Biegefederelements längs der Linie F-F in Fig. 20,
Fig. 28 eine Schnittansicht bzw. eine Querschnittsfläche des in den Fig. 20-25 dargestellten Biegefederelements längs der Linie E-E in Fig. 20,
Fig. 29 eine Schnittansicht bzw. eine Querschnittsfläche des in den Fig. 20-25 dargestellten Biegefederelements längs der Linie D-D in Fig. 20,
Fig. 30 eine perspektivische Darstellung des in den Fig. 20-29 dargestellten Biegefederelements, wobei zur Verdeutlichung der Formgebung des Biegefederelements quer zur Längsrichtung verlaufende Umfangskonturlinien abgebildet sind,
Fig. 31 eine perspektivische Darstellung des in den Fig. 22-30 dargestellten Biegefederelements, wobei zur Veranschaulichung auch nicht sichtbare Konturen und Umfangskonturlinien gestrichelt dargestellt sind,
Fig. 32 eine vergrößerte Darstellung des Bereichs XXXII der perspektivischen Darstellung des Biegefederelements gemäß Fig. 30 und
Fig. 33 eine vergrößerte Darstellung des Bereichs XXXIII der perspektivischen Darstellung des Biegefederelements gemäß Fig. 31.

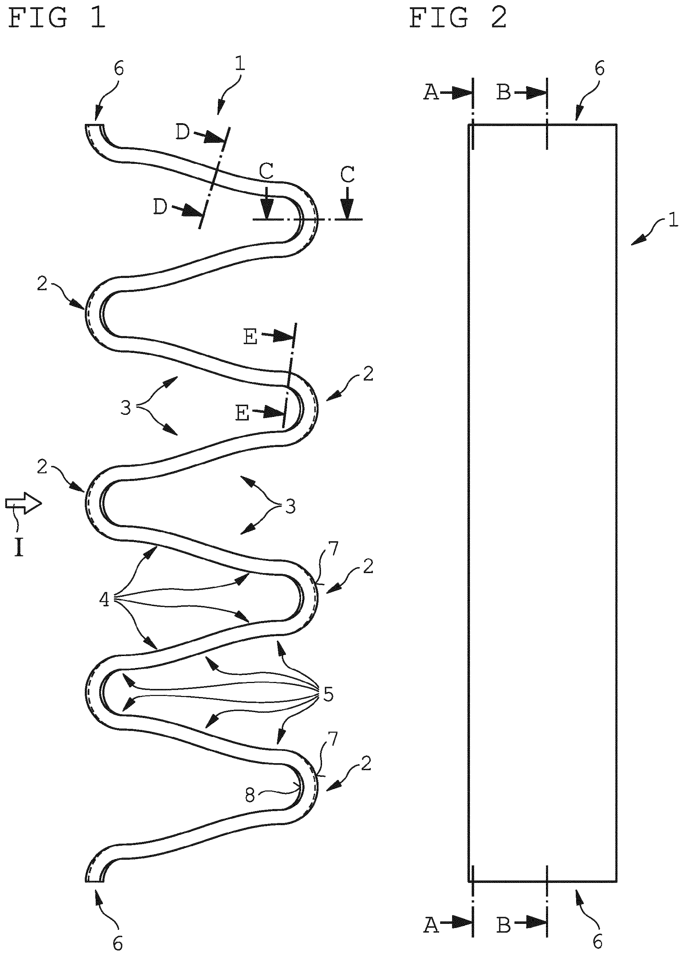

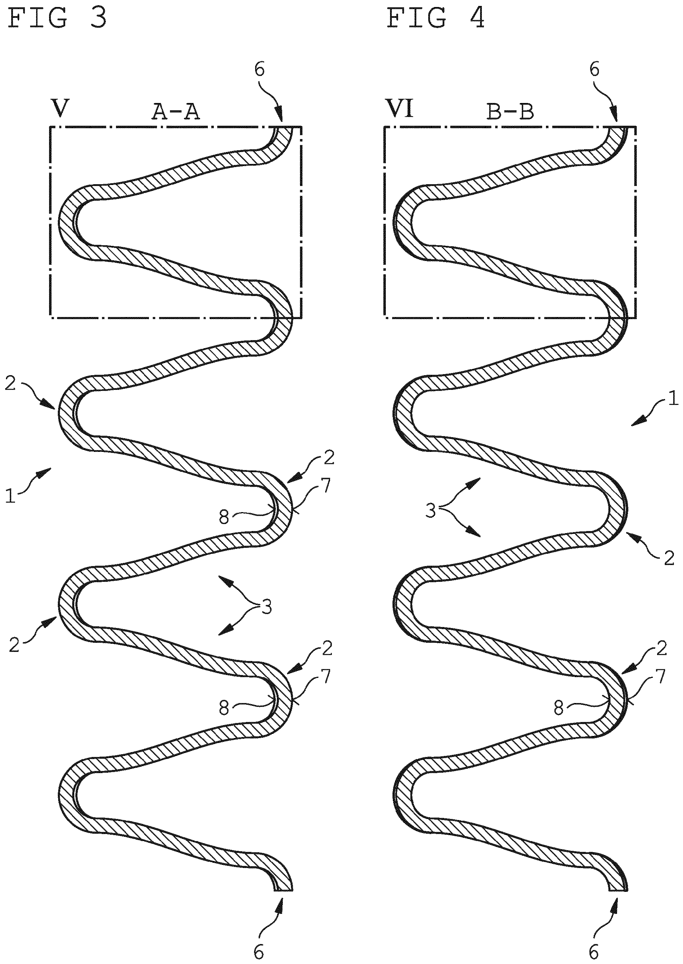

Ein in den Figuren 1 bis 9 exemplarisch dargestelltes Biegefederelement 1 ist aus einem Faserkunststoffverbundmaterial hergestellt und mäanderförmig ausgestaltet. In einem Kunststoffmatrixmaterial sind viele Fasern, beispielsweise Glasfasern eingebettet, die eine hohe Zugfestigkeit aufweisen. Die Fasern sind in Längsrichtung des Biegefederelements 1 ausgerichtet und erstrecken sich im Wesentlichen über den gesamten Verlauf des Biegefederelements 1.

Das Biegefederelement 1 weist sieben Umlenkungsbiegebereiche 2 auf. Jeder Umlenkungsbiegebereich 2 ist zwischen zwei Federschenkelabschnitten 3 angeordnet und bildet mit den beiden angrenzenden Federschenkelabschnitten 3 jeweils einen V-förmigen Biegefederelementabschnitt. Die jeweils in wechselnder Ausrichtung zueinander ineinander übergehenden V-förmigen Biegefederelementabschnitte bilden das mäanderförmige Biegefederelement 1. Ein derartiges Biegefederelement 1 kann beispielsweise als Federelement einer Radaufhängung eines Kraftfahrzeugs verwendet werden.

Die Federschenkelabschnitte 3 weisen in Längsrichtung jeweils einen S-förmigen Verlauf auf, der durch zwei ineinander übergehende Biegebereiche 4 mit jeweils entgegengesetzter Krümmung in Längsrichtung des Biegefederelements 1 innerhalb der einzelnen Federschenkelabschnitte 3 gebildet wird. Zwischen den einzelnen Biegebereichen 4 und den angrenzenden Umlenkungsbiegebereichen 2 sind jeweils kurze Abschnitte bzw. Bereiche 5 mit einer Krümmungsumkehr oder ohne eine nennenswerte Krümmung in Längsrichtung ausgebildet.

Das Biegefederelement 1 weist über seinen gesamten Verlauf in Längsrichtung eine gleichmäßige Dicke, bzw. eine gleichmäßig große Querschnittsfläche auf.

Bei einer auf Endbereiche 6 des Biegefederelements 1 von außen einwirkenden Kraft werden vor allem die Umlenkungsbiegebereiche 2 und in geringerem Maße auch die Biegebereiche 4 innerhalb der Federschenkelabschnitte 3 entgegen einer von dem Biegefederelement 1 erzeugten Federkraft elastisch verformt. Dabei treten insbesondere in den Umlenkungsbiegebereichen 2 und in den Biegebereichen 4 erhebliche Zug- und Druckspannungen auf, die durch die erzwungene Verformung erzeugt werden.

Die Umlenkungsbiegebereiche 2 weisen jeweils eine erste in Längsrichtung konvex gekrümmte Außenfläche 7 und eine zweite in Längsrichtung konkav gekrümmte Außenfläche 8 auf. Die erste Außenfläche 7 ist in dem Umlenkungsbiegebereich 2 nach außen gerichtet angeordnet und die zweite Außenfläche 8 ist in dem Umlenkungsbiegebereich 2 nach innen gerichtet angeordnet. Wird das Biegefederelement 1 durch von außen auf die Endbereiche 6 einwirkende Kräfte zusammengedrückt, verformen sich insbesondere die Umlenkungsbiegebereiche 2, wobei auf außen liegende Fasern im Bereich der ersten Außenfläche 7 vermehrt Zugkräfte einwirken und auf innenliegende Fasern im Bereich der zweiten Außenfläche 8 vermehrt Druckkräfte einwirken.

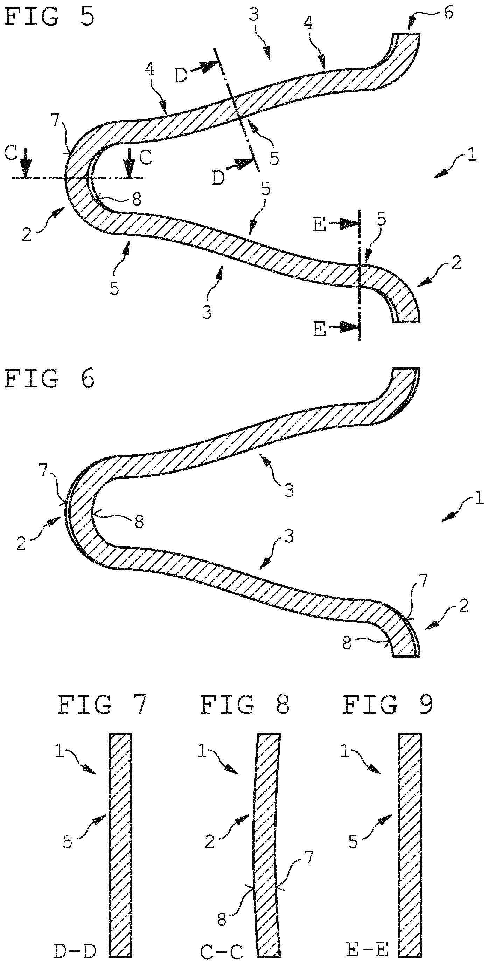

Die erste Außenfläche 7 weist in Querrichtung (in den Figuren 1, 3, 4, 5 und 6 jeweils senkrecht zur Abbildungsfläche) bzw. senkrecht zu der Längsrichtung des Biegefederelements 1 in den Umlenkungsbiegebereichen 2 eine konkave Krümmung auf. Die zweite Außenfläche 8 weist in Querrichtung eine konvexe Krümmung auf. Die in Längsrichtung des Biegefederelements 1 gleichbleibende Dicke, die in Querrichtung gradlinig bzw. nicht gekrümmt ausgestalteten Außenflächen der Bereiche 5 und die in den Umlenkungsbiegebereichen 2 ausgebildete konvexe, bzw. konkave Krümmung der ersten Außenfläche 7 und der zweiten Außenfläche 8 sind in vergrößerter Darstellung in den Figuren 5, 6 und insbesondere 7, 8 und 9 gezeigt.

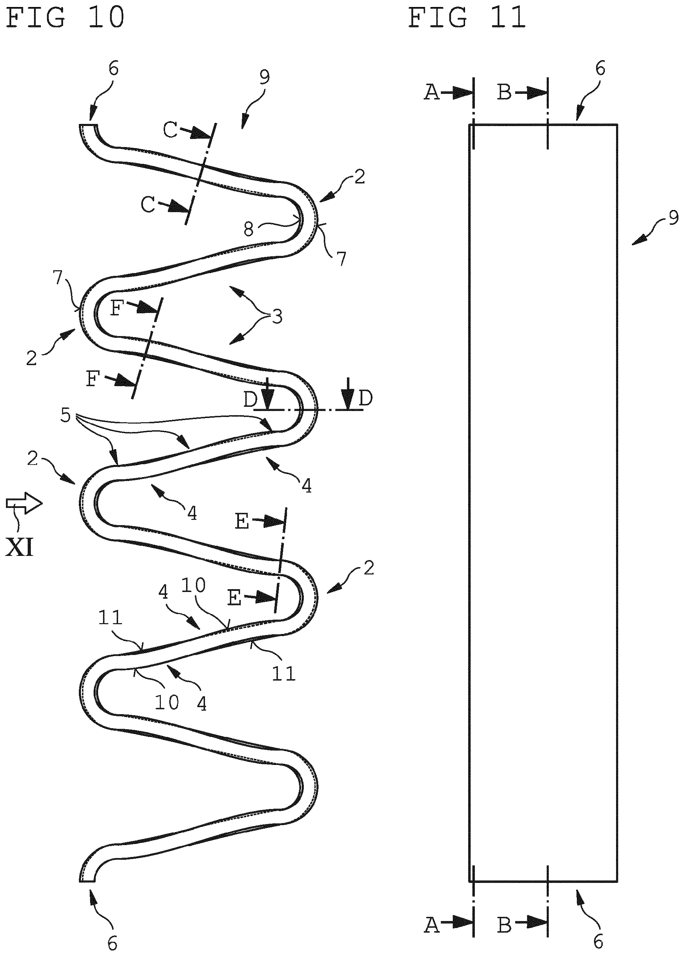

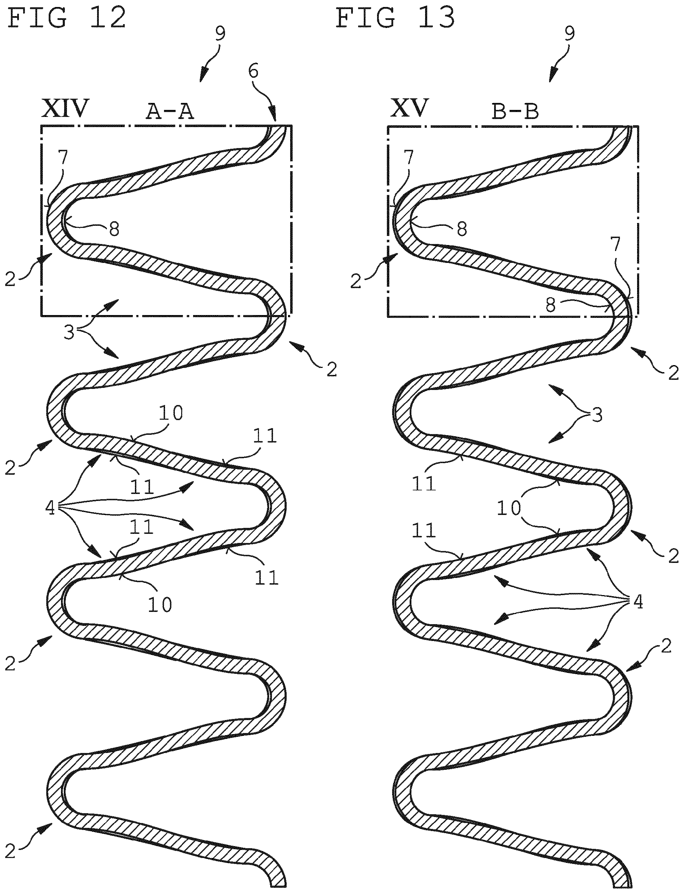

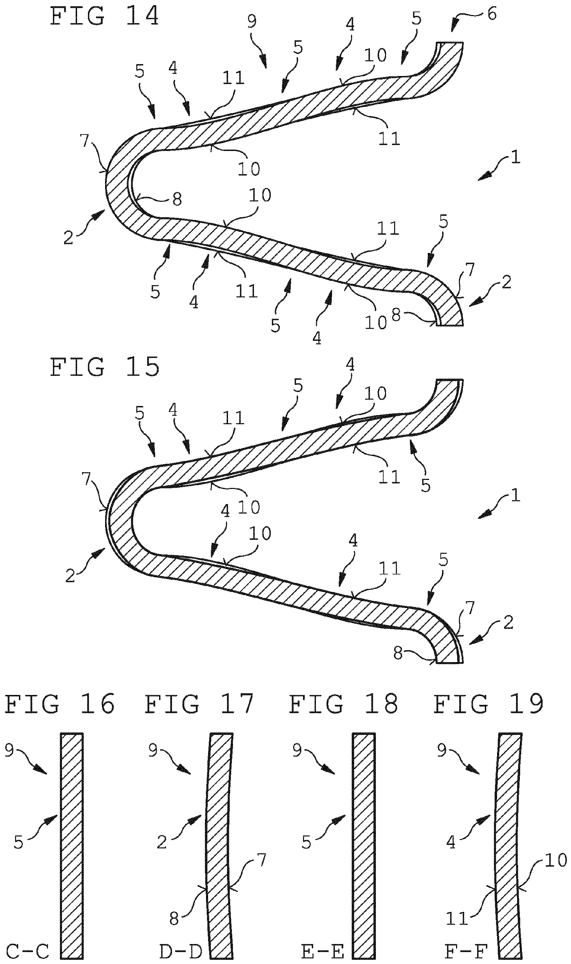

In den Figuren 10 bis 19 ist exemplarisch eine abweichende Ausgestaltung eines anderen Biegefederelements 9 dargestellt. Im Unterschied zu dem Biegefederelement 1 gemäß den Figuren 1 bis 9 weisen die Außenflächen 10 und 11 in den Biegebereichen 4 innerhalb der Federschenkelabschnitte 3 ebenfalls in Querrichtung senkrecht zu der jeweiligen Längsrichtung eine Krümmung auf. Die in den Biegebereichen 4 in Längsrichtung konvex gekrümmten Außenflächen 10 weisen in Querrichtung eine konkave Krümmung auf. Die in den Biegebereichen 4 in Längsrichtung konkav gekrümmten Außenflächen 11, die den Außenflächen 10 gegenüberliegen, weisen in Querrichtung eine konvexe Krümmung auf. Auf diese Weise können auch in den S-förmig verlaufenden Federschenkelabschnitten 3 die bei einer Verformung auftretenden Spannungen und Beanspruchungen der Fasern gleichmäßig verteilt und Spannungsspitzen reduziert werden. Ebenso wie bei dem in den Figuren 1 bis 9 dargestellten Biegefederelement 1 ist die Dicke, bzw. die Querschnittsfläche des Biegefederelements 9 über den gesamten Verlauf hinweg konstant und gleich groß.

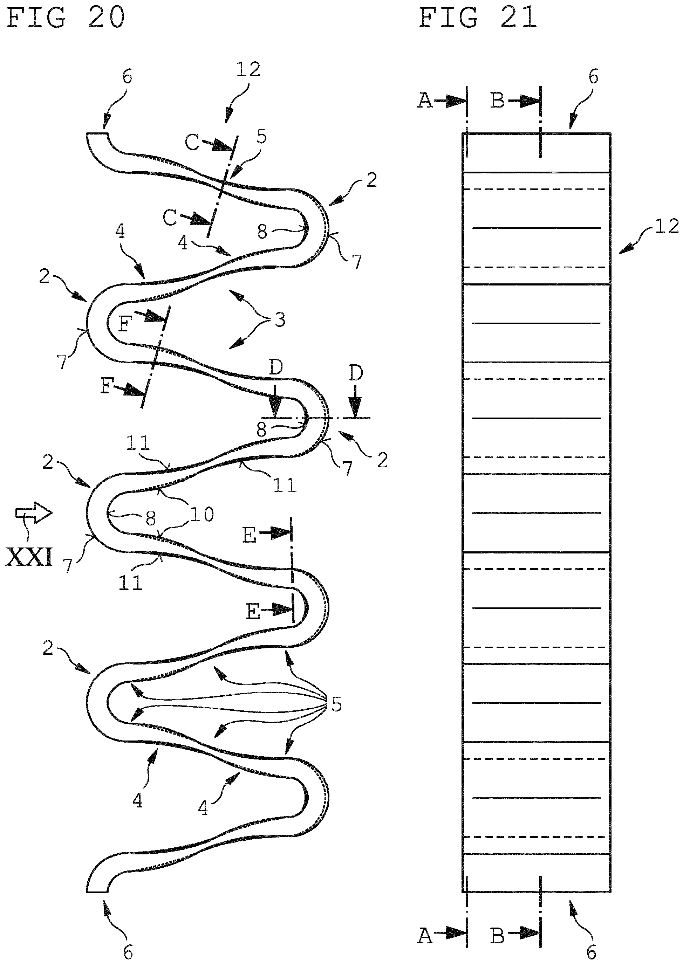

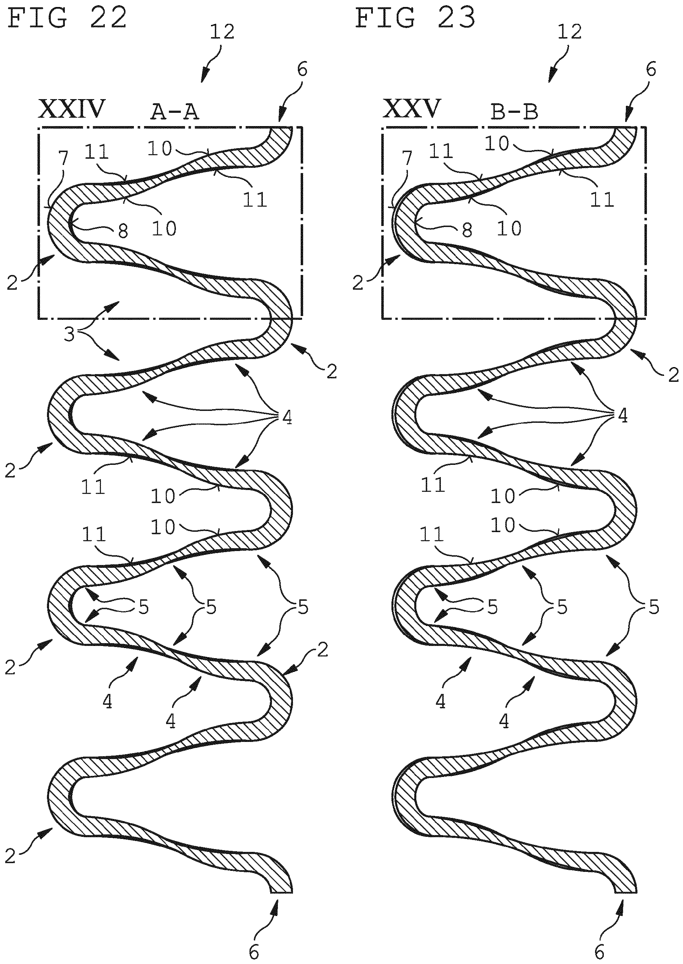

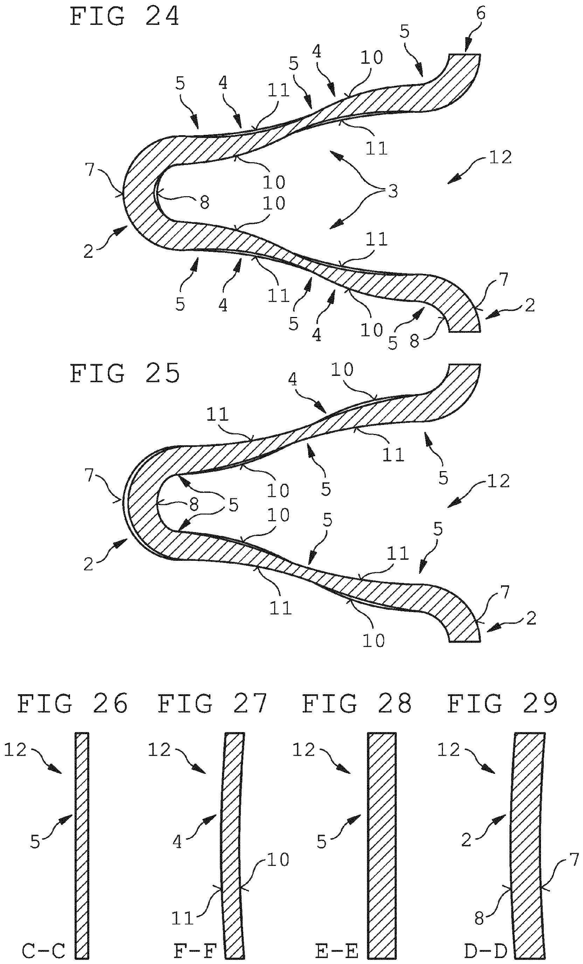

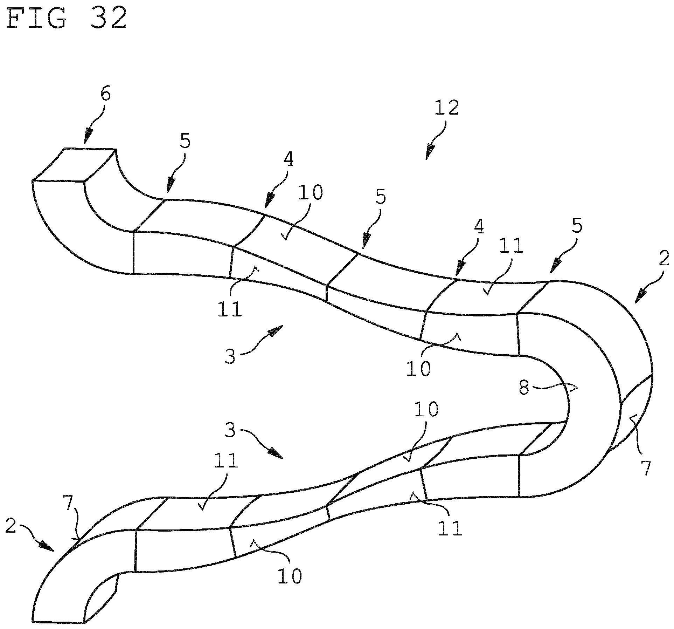

Bei dem in den Figuren 20 bis 33 exemplarisch dargestellten Biegefederelement 12 variiert die Dicke des Biegefederelements 12 in Längsrichtung über den Verlauf des Biegefederelements 12, wobei die Querschnittsfläche in den Umlenkungsbiegebereichen 2 mehr als doppelt so groß wie in den zwischen den Biegebereichen 4 befindlichen Bereichen 5 ist. Die unterschiedliche Dicke des Biegefederelements 12 kann beispielsweise durch eine daran angepasste unterschiedliche Anzahl von Prepreg-Schichten bei der Herstellung des Biegefederelements 12 aus Faserkunststoffverbundmaterial-Prepregs erzeugt werden. Es ist ebenfalls möglich, durch ein geeignetes Werkzeug diese Formgebung dem Biegefederelement 12 aufzuprägen.

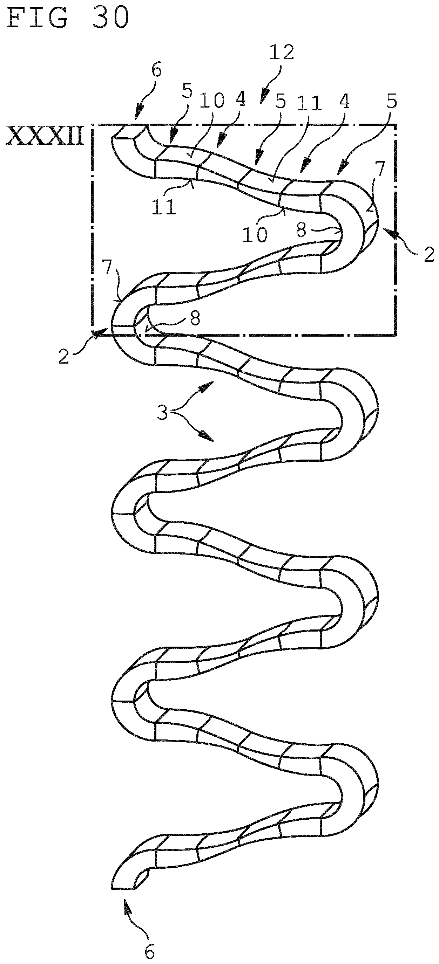

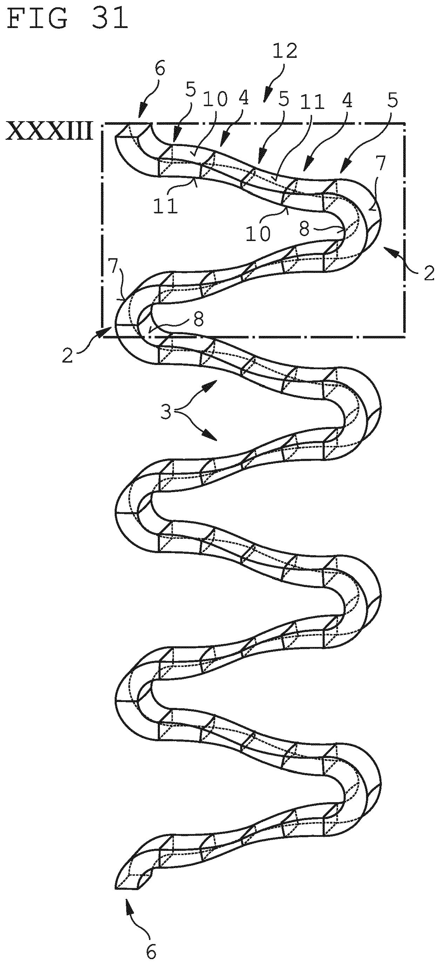

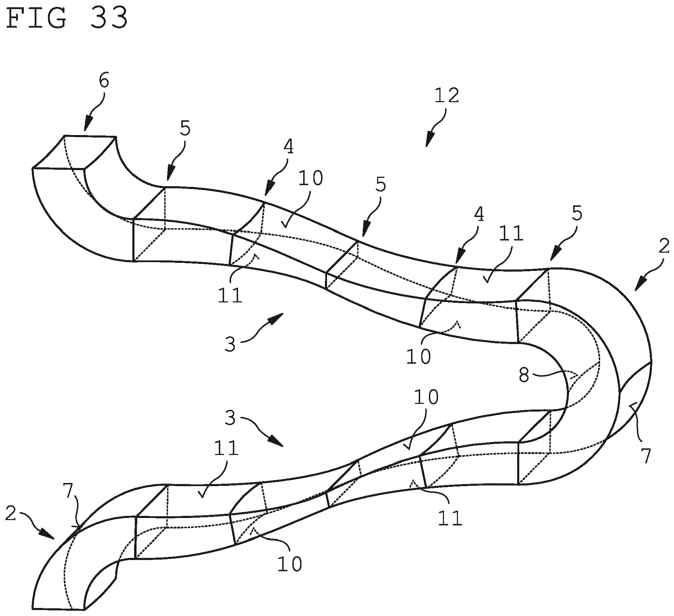

In den Figuren 30 bis 33 sind jeweils perspektivische Ansichten des in den Figuren 20 bis 29 in Seitenansichten und in Schnittansichten abgebildeten Biegefederelements 12 dargestellt. Um die Krümmung der Außenflächen in den Umlenkungsbiegebereichen 2, den Biegebereichen 4 und den Bereichen 5 zu veranschaulichen sind jeweils Umfangskonturlinien abgebildet. In den Figuren 31 und 33 sind zusätzlich auch die rückseitigen und durch das Biegefederelement 12 verdeckten Kanten und Umfangskonturlinienabschnitte gestrichelt dargestellt.

## Patentansprüche

1. Biegefederelement (1, 9, 12) aus einem Faserkunststoffverbundmaterial mit in Längsrichtung des Biegefederelements (1, 9, 12) verlaufend angeordneten Fasern und mit mindestens einem in Längsrichtung eine Krümmung aufweisenden Biegebereich (2, 4), wobei das Biegefederelement (1, 9, 12) in einem unbelasteten Zustand in dem Biegebereich (2, 4) eine in einer Querrichtung senkrecht zu der Längsrichtung gekrümmte erste Außenfläche (7, 10) aufweist, **dadurch gekennzeichnet, dass** die erste Außenfläche (7, 10) auf einer in Längsrichtung konvex verlaufenden Außenseite des Biegebereichs (2, 4) angeordnet ist und in der Querrichtung senkrecht zu der Längsrichtung eine konkave Krümmung aufweist.

2. Biegefederelement (1, 9, 12) nach Anspruch 1, **dadurch gekennzeichnet, dass** das Biegefederelement (1, 9, 12) in dem Biegebereich (2, 4) eine der ersten Außenfläche (7, 10) gegenüberliegende in Querrichtung gekrümmte zweite Außenfläche (8, 11) aufweist.

3. Biegefederelement (1, 9, 12) nach Anspruch 2, **dadurch gekennzeichnet, dass** die zweite Außenfläche (8, 11) auf einer in Längsrichtung konkav gekrümmten Außenseite des Biegebereichs (2, 4) angeordnet ist und in der Querrichtung senkrecht zu der Längsrichtung eine konvexe Krümmung aufweist.

4. Biegefederelement (1, 9) nach einem der vorangehenden Ansprüche, **dadurch gekennzeichnet, dass** das Biegefederelement (1, 9) über eine quer zu der Längsrichtung verlaufende Querschnittsfläche in dem Biegebereich (2, 4) eine konstante Dicke aufweist.

5. Biegefederelement (1, 9, 12) nach einem der vorangehenden Ansprüche, **dadurch gekennzeichnet, dass** das Biegefederelement (1, 9, 12) einen zwischen zwei in entgegengesetzter Richtung verlaufenden Federschenkelabschnitten (3) angeordneten Umlenkungsbiegebereich (2) aufweist, in welchem sich der Verlauf des Biegefederelements (1, 9, 12) ändert, so dass ein mäanderförmiges Biegefederelement (1, 9, 12) gebildet wird, wobei die erste in Längsrichtung konvex gekrümmte Außenfläche (7, 10) des Biegebereichs (2, 4) eine konkave Krümmung in Querrichtung und die zweite in Längsrichtung konkav gekrümmte Außenfläche (8, 12) eine konvexe Krümmung in Querrichtung aufweist.

6. Biegefederelement (1, 9, 12) nach Anspruch 5, **dadurch gekennzeichnet, dass** mindestens ein Federschenkelabschnitt (3) einen S-förmigen Verlauf aufweist und in dem in Längsrichtung gekrümmten Biegebereichen (4) des Federschenkelabschnitts (3) mindestens eine in Querrichtung gekrümmte Außenfläche (10, 11) aufweist.

7. Biegefederelement (12) nach einem der vorangehenden Ansprüche, **dadurch gekennzeichnet, dass** das Biegefederelement (12) in dem Biegebereich (2, 4) senkrecht zu der Längsrichtung eine größere Querschnittsfläche als in einem benachbarten Bereich (5) aufweist.

## Claims

1. Flexible spring element (1, 9, 12) made of a fiber plastic composite material having fibers extending in the longitudinal direction of the flexible spring element (1, 9, 12) and having at least one bending area (2,4) with a curvature in the longitudinal direction, wherein the flexible spring element (1, 9, 12), in an unloaded state, comprises a first outer surface (7, 10) which is curved in a transverse direction perpendicular to the longitudinal direction in the bending area (2, 4), **characterized in that** the first outer surface (7, 10) is arranged on an outer side of the bending area (2, 4) extending convexly in the longitudinal direction and has a concave curvature in the transverse direction perpendicular to the longitudinal direction.

2. Flexible spring element (1, 9, 12) according to Claim 1, **characterized in that** in the bending area (2, 4), the flexible spring element (1, 9, 12) comprises a second outer surface (8, 11) located opposite the first outer surface (7, 10) and curved in the transverse direction.

3. Flexible spring element (1, 9, 12) according to Claim 2, **characterized in that** the second outer surface (8, 11) is arranged on an outer side of the bending area (2, 4) that is concavely curved in the longitudinal direction and has a convex curvature in the transverse direction perpendicular to the longitudinal direction.

4. Flexible spring element (1, 9) according to one of the preceding Claims, **characterized in that** the flexible spring element (1, 9) has a constant thickness over a cross-sectional area extending transversely to the longitudinal direction in the bending area (2, 4).

5. Flexible spring element (1, 9, 12) according to one of the preceding Claims, **characterized in that** the flexible spring element (1, 9, 12) comprises a deflecting bending area (2) arranged between two spring leg portions (3) extending in opposite directions, in which area the course of the flexible spring element (1, 9, 12) changes such that a flexible spring element (1, 9, 12) of meandering shape is formed, wherein the first outer surface (7, 10) of the bending area (2, 4) which is curved convexly in the longitudinal direction has a concave curvature in the transverse direction and the second outer surface (8, 12) which is curved concavely in the longitudinal direction has a convex curvature in the transverse direction.

6. Flexible spring element (1, 9, 12) according to Claim 5, **characterized in that** at least one spring leg element portion (3) has an S-shaped course and comprises at least one outer surface (10, 11) curved in the transverse direction in the bending areas (4) of the spring leg portion which are curved in the longitudinal direction.

7. Flexible spring element (12) according to one of the preceding Claims, **characterized in that** the flexible spring element (12) has a larger cross-sectional area in the bending area (2, 4) perpendicular to the longitudinal direction than in a neighbouring area (5).

## Revendications

1. Élément à ressort de flexion (1, 9, 12) constitué en un matériau composite renforcé de fibres synthétiques ayant des fibres agencées de manière à s'étendre dans la direction longitudinale de l'élément à ressort de flexion (1, 9, 12) et ayant au moins une zone de flexion (2, 4) présentant une courbure dans la direction longitudinale, l'élément à ressort de flexion (1, 9, 12) présentant, dans un état sans contrainte, dans la zone de flexion (2, 4), une première surface extérieure (7, 10) incurvée dans une direction transversale, perpendiculairement à la direction longitudinale, **caractérisé en ce que** la première surface extérieure (7, 10) est agencée sur un côté externe de la zone de flexion (2, 4) qui s'étend de manière convexe dans une direction longitudinale et **en ce qu'**elle présente une courbure concave dans la direction transversale, perpendiculairement à la direction longitudinale.

2. Élément à ressort de flexion (1, 9, 12) selon la revendication 1, **caractérisé en ce que** l'élément de ressort à flexion (1, 9, 12) présente, dans la zone de flexion (2, 4), une deuxième surface extérieure (8, 11) qui est incurvée dans la direction transversale et située à l'opposé de la première surface extérieure (7, 10).

3. Élément à ressort de flexion (1, 9, 12) selon la revendication 2, **caractérisé en ce que** la deuxième surface extérieure (8, 11) est agencée sur un côté externe de la zone de flexion (2, 4) qui est incurvée de manière concave dans une direction longitudinale et présente une courbure convexe dans la direction transversale, perpendiculairement à la direction longitudinale.

4. Élément à ressort de flexion (1, 9) selon l'une quelconque des revendications précédentes, **caractérisé en ce que** l'élément de ressort à flexion (1, 9) présente une épaisseur constante dans la zone de flexion (2, 4) sur une surface de section transversale s'étendant de manière transversale par rapport à la direction longitudinale.

5. Élément à ressort de flexion (1, 9, 12) selon l'une quelconque des revendications précédentes, **caractérisé en ce que** l'élément à ressort de flexion (1, 9, 12) présente une zone de flexion-déflexion (2) agencée entre deux parties des branches du ressort (3) s'étendant dans la direction opposée, dans laquelle zone le cours de l'élément à ressort de flexion (1, 9, 12) est modifié, de façon à ainsi former un élément à ressort de flexion (1, 9, 12) en méandres, la première surface extérieure (7, 10) de la zone de flexion (2, 4) qui est incurvée de manière convexe dans une direction longitudinale présentant une courbure concave dans une direction transversale et la deuxième surface extérieure (8, 12) qui est incurvée de manière concave dans une direction longitudinale présentant une courbure convexe dans une direction transversale.

6. Élément à ressort de flexion (1, 9, 12) selon la revendication 5, **caractérisé en ce que** au moins une branche de ressort (3) présente un déploiement en forme de S, et **en ce qu'**il présente au moins une surface extérieure (10, 11) incurvée dans une direction transversale au sein des zones de flexion (4) du tronçon de branche du ressort (3) qui sont incurvées dans une direction longitudinale.

7. Élément à ressort de flexion (12) selon l'une quelconque des revendications précédentes, **caractérisé en ce que** l'élément à ressort de flexion (12) dans la zone de flexion (2, 4) présente, perpendiculairement à la direction longitudinale, une surface de section transversale plus grand que dans une zone adjacente (5).
